# EUROPEAN PATENT SPECIFICATION

(11) **EP 2 268 426 B1**
(45) Date of publication and mention of the grant of the patent: **16.01.2013**
(21) Application number: 07713426.0
(22) Date of filing: 01.02.2007
(51) Int. Cl.: B09B 3/00, C04B 7/24, C04B 7/44

(54) **INTEGRATED PLANT FOR SEPARATION, RECOVERY AND RE-USE OF SOLID DOMESTIC WASTE, WITH PRODUCTION OF CEMENT AND/OR BRICKS**
INTEGRIERTE ANLAGE FÜR TRENNUNG, RÜCKGEWINNUNG UND WIEDERVERWENDUNG VON FESTEM HAUSHALTSMÜLL MIT HERSTELLUNG VON ZEMENT UND/ODER ZIEGELN
USINE INTÉGRÉE POUR LA SÉPARATION, LA RÉCUPÉRATION ET LA RÉUTILISATION DE DÉCHETS DOMESTIQUES SOLIDES, AVEC PRODUCTION DE CIMENT ET/OU DE BRIQUES

(43) Date of publication of application: 05.01.2011
(73) Proprietor: Cittadini, Antony, Bayswater, VIC 3153 (AU)
(72) Inventor: CITTADINI BIANCO, Severina, deceased (AU); CITTADINI, Antony, Victoria (AU)
(74) Representative: Vinci, Marcello
(86) International application number: PCT/IT2007/000068
(87) International publication number: WO 2008/093369

(56) References cited:
- EP-A- 0 628 526
- EP-A- 0 767 011
- EP-A- 0 799 811
- EP-A- 1 652 585
- WO-A-00/27954
- DE-A1- 19 602 189
- DE-A1- 19 650 103

## Description

The present patent relates to plants for the treatment, recovery and re-use of solid domestic waste and in particular concerns a new integrated plant for separation, treatment, recovery and re-use of solid domestic waste, with the production of cement and/or bricks.

Currently there is considerable awareness of environmental problems, and in particular problems connected with the exploitation of non-renewable raw materials, pollution caused by emissions produced by anthropic, industrial or civil activities, and the management and correct disposal of waste.

In particular, in view of the constant increase in the production of waste, particularly solid domestic waste, i.e. the waste produced in a household environment, the need to separate waste is of current interest, in order to recover or recycle certain categories of goods such as glass, aluminium, paper, plastic, etc.

The possibility of using some waste categories for the production of energy, deriving mainly from the combustion of paper or plastic materials with a high calorific power or from the combustion of biogas, obtained mainly from the anaerobic digestion of organic waste, is known.

For recycling and energy recovery of solid domestic waste to be efficient and economically sustainable, however, the waste must be carefully separated beforehand, separating material with a high calorific power, substances subject to decay which must be stabilised, inert, ferrous and vitreous materials etc.

Each of said categories can then be sent to specific processes for recovery, also of energy, re-use or disposal.

All these operations have the immediate advantage of reducing the quantity of waste dumped at the landfill, with consequent benefits in environmental and economic terms.

Recycling and re-use of waste also reduces the exploitation of raw materials.

A further important object of waste energy recovery consists in maximising exploitation of the same in order to obtain energy, thus limiting exploitation of non-renewable resources such as fossil fuels, the gaseous emissions of which during combustion are, moreover, more polluting than those obtained from the combustion of RDF and biogas.

Separate waste collection is known, where the users who produce the waste are required to separate it at source, differentiating it into the various categories, the main ones being: organic or "wet" waste, consisting mainly of kitchen waste and in general material with a high organic content, paper or cardboard, plastic, aluminium, ferrous material, glass, bulky refuse such as electrical household appliances or furniture, and non-recyclable dry waste.

Each of these categories is then collected and undergoes specific separate treatment. The organic waste, for example, undergoes stabilisation, for the production of compost or fertilizer, and for the production of biogas.

The paper or plastic materials can be sent to recycling plants or, more conveniently, to plants for the production of RDF (Refuse-Derived Fuel) with a high calorific power for the generation of energy.

The glass and some metallic materials are usually recycled or re-used, while the non-recyclable waste is sent to the landfill as it is.

The recycling and recovery of said waste categories can, however, be effectively performed and produce economically viable results only if said separation at source is carried out carefully and thoroughly.

Very often, due to laziness or lack of adequate facilities, organisation, services or information, said separation at source is not performed effectively, so that the part sent directly for recycling, recovery or re-use is very small and does not justify in economic terms the provision of recovery and recycling plants, thermal processing plants etc.

For this reason, plants such as that described in EP-1 652 585 are known for the separation of non-differentiated waste, i.e. waste that arrives at the plant as it is.

Said plants consist of a succession of equipment and devices suitable for progressively differentiating the waste into the basic categories: bulky refuse, "heavy" part, i.e. inert materials in general, such as gravel, sand, ceramic, bricks, plaster and cement mixes coming from construction or demolition work, glass, metallic materials, "light" part, i.e. paper, cardboard, plastic, textiles and organic waste.

Said plant therefore has the object of separating the waste categories and then treating some of said categories in order to recover or re-use them.

For example, RDF is produced by specifically treating said light waste which is then transported to another site for sale and generation of energy.

Compost is produced by the treatment of organic waste, and is then transported to another site for sale and use as fertiliser.

The inert materials are generally disposed of directly at the landfills or, alternatively, transported to another site and used as road subgrade.

The object of the present invention is a new integrated plant for separation, recovery and re-use of waste, particularly solid domestic waste, also as it is, with the production of cement and/or bricks.

The main aim of the present invention is to incorporate in one single plant, in addition to the stations for separation and treatment of the waste, also the stations for energy recovery and/or re-use of the materials obtained from separation of the waste, which constitute raw material and/or fuel in the processes for production of cement and/or bricks. That aim is achieved by the integrated plant as defined in claim 1.

In particular, one of the objects of the present invention is to incorporate in one single plant the stations for re-use of the inert materials as raw material in the production of cement.

A further object of the present invention is to incorporate in one single plant the stations for recovery of energy from the part of the waste consisting of paper, plastic and textiles, used as fuel in the production of cement.

A further object of the present invention is to incorporate in one single plant the stations for recovery of energy from the organic part of the waste, used as fuel in the production of cement.

A further object of the present invention is to incorporate in one single plant the stations for energy recovery of the biogas, used as fuel in the production of cement or bricks.

A further object of the present invention is to incorporate in one single plant the phase of disposal of the organic part of the waste, used as an additive for the clay in the production of bricks.

A further object of the present invention is to minimise the quantity of waste materials, i.e. the quantity of material to be taken to and disposed of at the landfill.

A further object of the present invention is to maximise the quantity of waste appropriately disposed of in safe conditions, minimising polluting emissions.

An important advantage of the present invention consists in the fact that some of the waste categories are used as raw material and/or as fuel directly in the plant, therefore without requiring transport of the inert materials and/or the RDF and/or the compost and/or the biogas, for example, with consequent enormous economic and environmental advantages.

A further important advantage of the present invention consists in the fact that, for the production of cement and/or bricks, energy resources and raw materials from waste are exploited, with consequent environmental benefits and economic advantages for the producer.

These and further objects, direct and complementary, are achieved by the new integrated plant for separation, recovery and re-use of waste, particularly solid domestic waste, also conveyed to said plant as it is, i.e. non-differentiated, and in which the inert material is used as raw material in the production of cement, the light part and the biogas are used as fuel in the production of cement and/or bricks and the compost is used as fuel in the production of cement and/or as an additive for the clay in the production of bricks, for appropriate disposal.

The new integrated plant comprises, in its main parts:
- at least one line for separation of the waste as it is at least into the following categories: heavy part, comprising inert materials, glass and metals, light part, i.e. paper, plastic, textiles etc., and organic part;
- at least one line for treatment of the organic part, for the production of compost and/or biogas;
- line for treatment of the light part if necessary, for the production of RDF;
- at least one cement production line, in which the inert material is used as raw material, while the light part, the compost and the biogas are used as fuel;
   and, alternatively or in combination with said cement production line,
- at least one line for the production of bricks, in which the biogas is used as fuel, while the compost is used as an additive for the clay and is thus disposed of by means of combustion, during baking of the bricks.

The new integrated plant for separation and recovery/re-use of solid domestic waste as it is produces at output a minimum quantity of waste material, which consists substantially of any non-recyclable waste, any bulky refuse, and the combustion ashes, to be taken to the landfill or treated in other more specific ways.

The new plant produces cement and bricks, using as raw material and/or as fuels the materials coming directly from separation of the waste.

Combustion of the light part or the RDF takes place in complete safety, with control of the polluting gaseous emissions via control of the combustion temperature, which, since it is higher than 1500°C, limits the production of harmful unburnt substances, such as dioxin.

Alternatively or in combination with the above, part of the light waste can be sold for the production of RDF and not used directly in the plant.

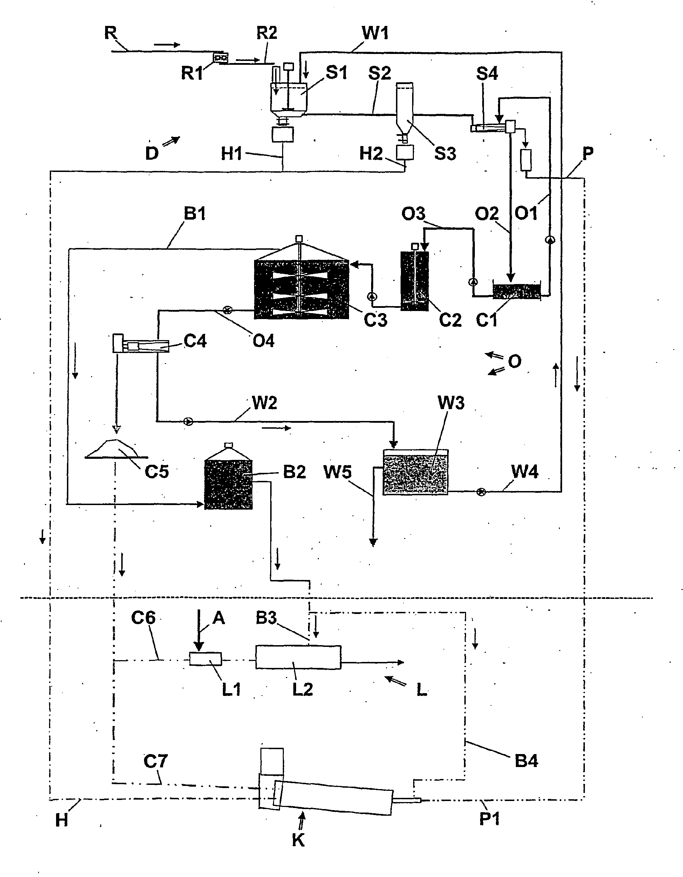

The characteristics of the new integrated plant will be better illustrated in the following description with reference to the drawing, attached by way of non-limiting example.

The figure schematises the waste separation process, where the product categories obtained are then used in the process for production of cement and/or bricks.

The new integrated plant comprises:
- at least one line (D) for separation of the incoming waste (R) as it is;
- at least one line (O) for treatment of the organic part, for the production of compost (C5) and/or biogas (B1);
- at least one cement production line (K);
   and, alternatively or in combination with said cement production line (K),
- at least one brick production line (L).

The plant receives waste (R) that has not been separated, particularly solid domestic waste, therefore produced mainly in a household environment.

The waste, contained for example in sacks, is placed in at least one sack slitter or shredder (R1) suitable for breaking the sacks containing the waste and performing coarse shredding of the waste.

It is preferable for any bulky refuse, such as electrical household appliances or other, to be separated upstream of this process.

The waste (R2) thus shredded then undergoes the separation phases.

For said purpose, it is possible to use various types of separator devices, such as gravity separators, ballistic separators, screens, etc.

In the preferred solution, shown in the figure, said waste (R2) is for example placed in a turbo dissolver (S1) where it is left to decant in water (W1) to permit a first separation of the "heavy" part (H1), which accumulates on the bottom from where it is then removed, from the slurry containing the "light" part and the organic substance.

The turbo dissolver (S1) also has the function of placing in suspension the organic substance contained in the waste, which will subsequently be recovered and treated for the production of compost (C5).

The "heavy" part (H1) discharged from said turbo dissolver (S1) contains mainly stones, rubble, glass, metals, ceramic, etc.

The slurry (S2) drawn off by said turbo dissolver (S1) is placed in a sedimentation tank (S3), where further quantities of heavy parts (H2) are separated from the slurry containing the light part and the organic part of the waste.

Said heavy part (H2) from said slurry sedimentation tank (S3), combined with the heavy part (H1) coming out of the turbo dissolver (S1), constitutes the mass of inert material (H) to be used, for example, as raw material, with or without further treatment, in the cement production line (K).

The slurry taken from said sedimentation tank (S3) is then passed through a dewatering washing screen (S4) for separation of the light part (P), which is also appropriately dehumidified, from the organic part suspended in the slurry.

To increase separation efficiency; at least one storage tank (C1) for the slurry (O1) is used at the outlet of said dewatering washing screen (S4), from which a recirculation flow is withdrawn (02) and reintroduced into said dewatering washing screen (S4). The slurry (03) coming out of said storage tank (C1) is then treated in special devices (C2) for the removal of sand and further shredding of the fragments of organic substance and then sent to the tanks (C3) inside which the anaerobic digestion of the slurry takes place, with consequent production of biogas (B1) and stabilised organic substance (04) with high humidity level.

Said stabilised organic substance (04) is then sent to filter presses, screw presses or other devices (C4) for dehydration of the slurry and/or further treatments for producing compost (C5).

The water (W2) coming from dehydration of the slurry is stored if necessary in purposely provided tanks (W3) and then recirculated (W4) upstream of the plant in said turbo dissolver (S1) and/or conveyed as process water (W5) to said production lines (L, K).

Said compost (C5) can then be used as fuel (C7) in the cement production line (K) and/or as an additive (C6) for the raw material in the brick production line (L), where it is mixed with the clay (A) in the mixer device (L1) before it is placed in the furnace (L2).

During baking, the compost introduced is incinerated and therefore disposed of.

The biogas (B1) produced by the anaerobic digestion of the slurry (03) is stored in tanks (B2) and can be used as fuel (B3, B4) in the brick production line (L) and/or in the cement production line (K).

The light part (P) obtained by the screening, and containing substantially cellulosic, textile and plastic material, hence material with a high calorific power, can be used as fuel (P1) in the cement production line (K).

Therefore with reference to the preceding description and the accompanying drawing, the following claims are made.

## Claims

1. Integrated plant for separation, recovery and re-use of waste, comprising:
- at least one line (D) for separating the incoming waste (R) into the main categories: "heavy" part containing substantially inert materials, glass, metals; "light" part containing substantially cellulosic material, textiles, plastic; organic part;
- at least one line (O) for treatment of the organic part, for the production of compost (C5) and/or biogas (B1);
**characterised in that** it also comprises:
• at least one line (K, L) for the production of building materials;
• means for using said compost (C5) as fuel (C7) and/or as an additive (C6) in said at least one line (K, L) for the production of building materials;
• means for using said biogas (B3, B4) and/or said light part (P1) as fuel in said at least one line (K, L) for the production of building materials;
• a tank (W3) for storing at least a part of the water (W2) coming from dehydration of the stabilised organic substance (04) for the production of compost (C5), for using it at a process water (W5) in said least one line (K, L) for the production of building materials.

2. Integrated plant, according to claim 1, **characterised in that** it comprises at least one line (K) for the production of cement, using:
- the "heavy" part (H), coming from said waste separation line (D), as raw material;
- the "light" part (P), coming from said waste separation line (D), as fuel;
- the compost (C7), produced in the treatment line (O) of the organic part of the waste, as additive for the raw material and/or as fuel;
- the biogas (B4), produced in the treatment line (O) of the organic part of the waste, as fuel.

3. Integrated plant, according to claim 1 or 2, **characterised in that** it also comprises at least one line (L) for the production of bricks using:
- the compost (C6), produced in the treatment line (O) of the organic part of the waste, as additive for the clay (A);
- the biogas (B3), produced in the treatment line (O) of the organic part of the waste, as fuel,
and wherein baking of the mixture comprising clay (A) and compost (C5) causes combustion of the compost and hence the disposal thereof.

4. Integrated plant, according to claim 3, **characterised in that** the "light" part (P), coming from said waste separation line (D), is sent to successive lines for the production of Refuse - Derived - Fuel (RDF).

## Patentansprüche

1. Integrierte Anlage zur Trennung, Verwertung und Wiederverwendung von Abfall, Folgendes umfassend:
- wenigstens eine Linie (D) zur Trennung des eintreffenden Abfalls (R) in die Hauptkategorien: "schwere" Fraktion, die im Wesentlichen Inertstoffe, Glas, Metalle enthält; "leichte" Fraktion, die im Wesentlichen Zellulosematerial, Textilien, Kunststoff enthält; organische Fraktion;
- wenigstens eine Linie (O) zur Aufbereitung der organischen Fraktion für die Produktion von Kompost (C5) und/oder Biogas (B 1),
**dadurch gekennzeichnet, dass** sie außerdem Folgendes umfasst:
• wenigstens eine Linie (K, L) zur Produktion von Baustoffen;
• Mittel zur Verwendung des besagten Komposts (C5) als Kraftstoff (C7) und/oder als Zuschlag (C6) in der besagten, wenigstens einen Linie (K, L) für die Produktion von Baustoffen;
• Mittel zur Verwendung des besagten Biogases (B3, B4) und/oder der besagten leichten Fraktion (P1) als Kraftstoff in der besagten, wenigstens einen Linie (K, L) für die Produktion von Baustoffen;
• einen Tank (W3) für die Lagerung von wenigstens einem Teil des Wassers (W2) aus der Dehydratisierung der stabilisierten organischen Substanz (04) für die Produktion von Kompost (C5), für dessen Gebrauch als Prozesswasser (W5) in der besagten, wenigstens einen Linie (K, L) für die Produktion von Baustoffen.

2. Integrierte Anlage gemäß Patentanspruch 1, **dadurch gekennzeichnet, dass** sie wenigstens eine Linie (K) zur Produktion von Zement umfasst, unter Einsatz:
- der "schweren" Fraktion (H) aus der Abfalltrennungslinie (D) als Rohstoff;
- der "leichten" Fraktion (P) aus der aus der Abfalltrennungslinie (D) als Kraftstoff;
- des in der Aufbereitungslinie (O) der organischen Abfallfraktion produzierten Komposts (C7) als Zuschlag für den Rohstoff und/oder als Kraftstoff;
- des in der Aufbereitungslinie (O) der organischen Abfallfraktion produzierten Biogases (B4) als Kraftstoff.

3. Integrierte Anlage gemäß Patentanspruch 1 oder 2, **dadurch gekennzeichnet, dass** sie außerdem wenigstens eine Linie (L) für die Produktion von Ziegelsteinen umfasst, unter Einsatz:
- des in der Aufbereitungslinie (O) der organischen Abfallfraktion produzierten Komposts (C6) als Zuschlag für den Ton (A),
- des in der Aufbereitungslinie (O) der organischen Abfallfraktion produzierten Biogases (B3) als Kraftstoff,
und wobei das Brennen des Ton (A) und Kompost (C5) enthaltenden Gemischs die Verbrennung des Komposts und damit dessen Entsorgung verursacht.

4. Integrierte Anlage gemäß Patentanspruch 3, **dadurch gekennzeichnet, dass** die "leichte" Fraktion (P) aus der besagten Abfalltrennungslinie (D) zu nachgeschalteten Linien für die Produktion von Refuse derived fuel (RDF) geleitet wird.

## Revendications

1. Installation intégrée de triage, récupération et de réutilisation de déchets, comprenant :
- au moins une ligne (D) pour le triage des déchets (R) en entrée dans les catégories principales : fraction « lourde » contenant essentiellement des matériaux inertes, verre, métaux ; fraction « légère » contenant essentiellement du matériel cellulosique, des textiles, plastique ; fraction organique ;
- au moins une ligne (O) pour le traitement de la fraction organique, pour la production de compost (C5) et/ou de biogaz (B1) ;
**caractérisée en ce qu'**elle comprend aussi :
• au moins une ligne (K, L) pour la production de matériaux de construction ;
• des moyens pour l'emploi dudit compost (C5) comme combustible (C7) et/ou comme additif (C6) dans ladite au moins une ligne (K, L) pour la production de matériaux de construction ;
• des moyens pour l'emploi dudit biogaz (B3, B4) et/ou de ladite fraction légère (P1) comme combustible dans ladite au moins une ligne (K, L) pour la production de matériaux de construction ;
• un réservoir (W3) pour conserver au moins une partie de l'eau (W2) dérivant de la déshydratation de la substance organique stabilisée (04) pour la production de compost (C5), pour l'utiliser comme eau de traitement (W5) dans ladite au moins une ligne (K, L) pour la production de matériaux de construction.

2. Installation intégrée, selon la revendication 1, **caractérisée en ce qu'**elle comprend au moins une ligne (K) pour la production de ciment, utilisant :
- la fraction "lourde" (H), dérivant de ladite ligne de triage (D) des déchets, comme matière première ;
- la fraction "légère" (P), dérivant de ladite ligne de triage (D) des déchets, comme combustible ;
- le compost (C7), produit dans la ligne de traitement (O) de la fraction organique des déchets, comme additif à la matière première et/ou comme combustible ;
- le biogaz (B4), produit dans la ligne de traitement (O) de la fraction organique des déchets, comme combustible.

3. Installation intégrée, selon la revendication 1 ou 2, **caractérisée en ce qu'**elle comprend aussi une ligne (L) pour la production de briques utilisant :
- le compost (C6), produit dans la ligne de traitement (O) de la fraction organique des déchets, comme additif pour l'argile (A) ;
- le biogaz (B3), produit dans la ligne de traitement (O) de la fraction organique des déchets, comme combustible,
et où la cuisson du mélange comprenant argile (A) e compost (C5) provoque la combustion du compost même et donc son écoulement.

4. Installation intégrée, selon la revendication 3, **caractérisée en ce que** la fraction "légère" (P), dérivant de ladite ligne de triage (D) des déchets, est envoyée à des lignes successives pour la production de RDF (combustible issu des déchets).
